# FASCICULE DE BREVET EUROPEEN

(11) **EP 3 402 828 B1**
(45) Date de publication et mention de la délivrance du brevet: **01.04.2020**
(21) Numéro de dépôt: 17702679.6
(22) Date de dépôt: 10.01.2017
(51) Int. Cl.: C08C 19/22, B60C 1/00

(54) **PROCÉDÉ DE MODIFICATION D'UN CAOUTCHOUC NATUREL ET CAOUTCHOUC NATUREL MODIFIÉ**
VERFAHREN ZUR ÄNDERUNG VON NATURLATEX UND VERÄNDERTER NATURLATEX
PROCESS FOR MODIFYING OF NATURAL RUBBER AND MODIFIED NATURAL RUBBER

(30) Priorité: 11.01.2016 FR 1650182
(43) Date de publication de la demande: 21.11.2018
(73) Titulaire: Compagnie Générale des Etablissements Michelin, 63000 Clermont-Ferrand (FR)
(72) Inventeur: JEAN-BAPTISTE-DIT-DOMINIQUE, François, 63040 Clermont-Ferrand Cedex 9 (FR); FLEURY, Etienne, 63040 Clermont-Ferrand Cedex 9 (FR)
(74) Mandataire: Bocchi, Brigitte
(86) Numéro de dépôt international: PCT/FR2017/050049
(87) Numéro de publication internationale: WO 2017/121950

(56) Documents cités:
- WO-A1-2015/028620
- WO-A1-2015/059269
- US-A1- 2013 296 493
- US-A1- 2014 018 503

## Description

L'invention a pour objet un nouveau procédé de modification d'un caoutchouc naturel, un nouveau caoutchouc naturel modifié et son utilisation dans une nouvelle composition de caoutchouc, notamment pour la fabrication de produits semi-finis pour pneumatiques ou pour la fabrication de pneumatiques.

Depuis que les économies de carburant et la nécessité de préserver l'environnement sont devenues une priorité, il est souhaitable de produire des mélanges de caoutchouc possédant de bonnes propriétés mécaniques et une hystérèse aussi faible que possible. Cette réduction de l'hystérèse est un objectif permanent qui doit toutefois se faire en conservant l'aptitude à la mise en œuvre, en particulier à cru, de ces mélanges de façon à pouvoir les utiliser en tant que compositions de caoutchouc pour la fabrication de divers produits finis ou semi-finis entrant dans la composition de pneumatiques, tels que par exemple des sous-couches, des flancs, des bandes de roulement..., et afin d'obtenir des pneumatiques possédant une résistance au roulement réduite.

Pour atteindre cet objectif, de nombreuses solutions ont déjà été expérimentées, dont notamment la modification de la structure de polymères et copolymères diéniques. La modification de la structure chimique d'un polymère impacte généralement ses propriétés chimiques et physiques ainsi que les propriétés des compositions le contenant. Cette modification de structure peut notamment être réalisée par l'introduction de fonctions chimiques à l'aide d'un agent de greffage. Les fonctions introduites peuvent, par exemple, améliorer la dispersion de la charge renforçante dans la matrice élastomérique et permettent ainsi l'obtention d'un matériau davantage homogène. Dans le cas de certaines charges renforçante, comme le noir de carbone ou la silice, une meilleure dispersion de la charge va généralement se traduire par une baisse d'hystérèse de la composition et donc in fine de la résistance au roulement.

A titre d'illustration de cet art antérieur, on peut mentionner les composés 1,3-dipolaires utilisés comme agent de greffage et de fonctionnalisation de polymères, notamment de copolymères diéniques. Le document WO-A2-2006/045088 décrit par exemple des composés 1,3-dipolaires qui permettent le greffage de fonctions oxazoline, thiazoline, alcoxysilane ou allylétain. Le document WO-A1-2012/007441 décrit des composés 1,3-dipolaires qui permettent le greffage de fonctions associatives azotées.

Les rendements de greffage de ces composés sur les polymères, notamment les copolymères diéniques synthétiques tels que le polybutadiène (BR), le polyisoprène de synthèse (IR), le copolymère de styrène et butadiène (SBR), sont généralement élevés, par exemple de l'ordre de 75% à 100%.

Cependant, ce taux de greffage n'est pas atteint lorsqu'on utilise des composés 1,3-dipolaires pour modifier la structure du caoutchouc naturel (le rendement de greffage est inférieur à celui obtenu pour des caoutchoucs synthétiques). A titre d'exemple, il est mentionné dans S. Cheawchan et al, Polymer, Vol.54, Issue 17, 2013, pp 4501-4510 et dans les documents US-A1-2011/0054134 et US-A1-2012/0046418, que le taux de modification d'un composé porteur de dipôles d'oxyde de nitrile sur un caoutchouc naturel en solution à 70°C ou 100°C ou en masse à une température ambiante ou à 70°C atteint au maximum 60 % et ce après 72 h de réaction.

Or, il existe un intérêt à utiliser le caoutchouc naturel notamment dans des compositions pour des produits finis ou semi-finis pour pneumatique. En effet, les préoccupations environnementales des dernières années militent en faveur de la mise au point de produits à base de matières premières d'origine renouvelable afin qu'ils répondent le plus possible aux préoccupations de développement durable en limitant les approvisionnements en matières premières issues de l'industrie pétrolière pour leur fabrication.

Il existe donc un besoin de fournir un procédé de modification d'un caoutchouc naturel par un composé 1,3-dipolaire comprenant au moins un atome d'azote, notamment au moins un dipôle oxyde de nitrile, ce procédé permettant de greffer avec un rendement amélioré des groupes chimiques susceptibles de modifier les propriétés du caoutchouc naturel, notamment des groupes chimiques qui permettent une bonne dispersion de la charge renforçante.

Un but de la présente invention est de fournir un procédé de modification d'un caoutchouc naturel et un caoutchouc naturel modifié palliant au moins partiellement les inconvénients précités.

Cet objectif est atteint en faisant réagir un composé 1,3-dipolaire comprenant au moins un atome d'azote, notamment au moins un dipôle oxyde de nitrile, sur un caoutchouc naturel au préalable époxydé ; ce qui de manière surprenante, permet d'améliorer et notamment d'augmenter le rendement de greffage dudit composé 1,3-dipolaire.

Un premier objet de l'invention concerne un procédé de modification d'un caoutchouc naturel comprenant au moins les étapes suivantes:
i. disposer d'au moins un caoutchouc naturel et époxyder ledit caoutchouc naturel pour obtenir un caoutchouc naturel époxydé, ou disposer d'un caoutchouc naturel préalablement époxydé,
ii. greffer sur ledit caoutchouc naturel époxydé ou sur ledit caoutchouc naturel préalablement époxydé au moins un composé 1,3-dipolaire ayant au moins un atome d'azote.

Selon un mode de réalisation de l'invention, l'étape (ii) peut être réalisée en masse ou en solution, de préférence en masse.

Selon un mode de réalisation, l'étape (ii) peut s'effectuer par chauffage à une température supérieure ou égale à 70°C, de préférence pendant au plus 4 heures, préférentiellement pendant au plus 2 heures et encore plus préférentiellement pendant au plus 30 minutes.

### DESCRIPTION DETAILLEE DE L'INVENTION

Dans la présente description, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (usuellement « phr » en anglais pour « per hundred part of rubber ») signifie parties en poids pour cent parties d'élastomères (du total des élastomères si plusieurs élastomères sont présents) ou caoutchouc présents dans la composition de caoutchouc.

Par « majoritairement » ou « à titre majoritaire », on entend au sens de la présente invention, que le composé est majoritaire parmi les composés du même type dans la composition, c'est-à-dire que c'est celui qui représente la plus grande quantité en masse parmi les composés du même type. En d'autres termes, la masse de ce composé représente au moins 51 % de la masse totale des composés du même type dans la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse totale des élastomères, autrement dit la masse de cet élastomère représente au moins 51 % de la masse totale des élastomères. De la même manière, une charge dite majoritaire est celle représentant la plus grande masse parmi les charges de la composition. En d'autres termes, la masse de cette charge représente au moins 51% de la masse totale des charges dans la composition.

Le terme « hétéroatome » désigne n'importe quel atome différent d'un atome d'hydrogène et d'un atome de carbone, de préférence l'azote, l'oxygène, le silicium, le soufre ou le phosphore.

L'expression « alkyle en Cᵢ-Cⱼ » désigne un groupe hydrocarboné linéaire, ramifié ou cyclique comprenant de i à j atomes de carbone ; i et j étant des nombres entiers.

Le terme « halogène » désigne un atome choisi parmi le groupe formé par le fluor (F), le chlore (Cl), le brome (Br) et l'iode (I), de préférence le chlore (Cl).

L'expression « alcoxyle en Cᵢ-Cⱼ » désigne un groupe -OW, dans lequel W représente un alkyle en Cᵢ-Cⱼ tel que défini ci-dessus ; i et j étant des nombres entiers.

L'expression « hétéroalkyle en Cᵢ-Cⱼ » désigne une chaîne alkyle comprenant de i à j atomes de carbone interrompue par au moins un hétéroatome, tel que N, O ou S ; i et j étant des nombres entiers.

L'expression « aryle en Ci-Cj » désigne un groupe aromatique comportant de i à j atomes de carbone ; i et j étant des nombres entiers.

L'expression « alkylaryle en Ci-Cj » désigne un groupe alkyle rattaché au reste de la molécule par un groupe aryle, l'ensemble des atomes de carbone du groupe alkyle et du groupe aryle étant compris entre i et j ; i et j étant des nombres entiers.

L'expression « arylalkyle en Ci-Cj » désigne un groupe aryle rattaché au reste de la molécule par un groupe alkyle, l'ensemble des atomes de carbone du groupe alkyle et aryle étant compris entre i et j ; i et j étant des nombres entiers.

L'expression « cycloalkyle en Ci-Cj » désigne un groupe hydrocarboné saturé cyclique avant de i à j atomes de carbone ; i et j étant des nombre entier.

Par l'expression « alcanediyle en Ci-Cj », on entend au sens de la présente invention, un groupe divalent de formule générale CₙH₂ₙ dérivé d'un alcane ayant entre i et j atomes de carbone. Le groupe divalent peut être linéaire ou ramifié et éventuellement être substitué.

Le procédé de modification de l'invention a pour caractéristique essentielle d'utiliser comme produit de départ un caoutchouc naturel ou un caoutchouc naturel préalablement époxydé.

Selon une première mise en œuvre du procédé conforme à l'invention, le produit de départ est un caoutchouc naturel que l'on époxyde. Le caoutchouc naturel peut se présenter sous forme de solide, il s'agit alors d'un caoutchouc naturel sec. Le caoutchouc naturel peut aussi se présenter sous forme liquide et plus précisément sous forme de latex, c'est-à-dire sous forme de particules dispersées dans un liquide, en particulier de l'eau. On parle alors de latex de caoutchouc naturel. Le latex de caoutchouc naturel peut exister sous différentes formes comme le détaille le chapitre 3 « Latex concentrâtes : properties and composition » de K.F.Gaseley, A.D.T. Gordon et T.D. Pendle dans «Naturel Rubber Science and Technology », A.D. Roberts, Oxford Univeristy Press-20, 1988. En particulier, plusieurs formes de latex de caoutchouc naturel sont commercialisées : les latex de caoutchouc naturel dits « de champ » (« filed latex »), les latex de caoutchouc naturel dits « concentrés » (« concentrated natural rubber latex »), les latex déprotéinisés ou encore les latex prévulcanisés. Le latex de caoutchouc naturel de champ est un latex dans lequel de l'ammoniac a été ajouté pour éviter une coagulation précoce. Le latex de caoutchouc naturel concentré correspond à un latex de champs qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite « HA » (« High Ammonia ») et de qualité dite « LA » (« Low Ammonia ») ; on utilisera avantageusement pour l'invention des latex de caoutchouc naturel concentrés de qualité HA. Le latex peut être utilisé directement ou préalablement dilué dans de l'eau pour faciliter sa mise en œuvre. Les latex de caoutchouc naturel peuvent être issus de l'hévéa, du Dandelion ou de la Guayule ; de préférence de l'hévéa.

L'époxydation peut être réalisée sur un latex de caoutchouc naturel ou sur un caoutchouc naturel sec. Préférentiellement, l'époxydation est réalisée sur un latex de caoutchouc naturel pour former un latex époxydé, qui peut notamment ensuite être séché. L'époxydation de tels caoutchoucs naturels est connue en soi. L'homme du métier saura adapter la technique d'époxydation en fonction du type de caoutchouc naturel à époxyder. A titre d'exemple de technique d'époxydation, on peut citer de manière non limitative les procédés à base de chlorohydrine ou de bromohydrine, les procédés d'oxydation directe ou des procédés à base de peroxydes d'hydrogène, d'alkyl hydroperoxides ou de peracides (tel que l'acide peracétique ou l'acide performique).

Selon une deuxième mise en œuvre du procédé conforme à l'invention, le produit de départ est un caoutchouc naturel préalablement époxydé. Des caoutchoucs naturels préalablement époxydés (ENR pour Epoxidized Naturel Rubber) sont disponibles commercialement. Comme pour la variante précédente, ces caoutchoucs peuvent être obtenus par époxydation des caoutchoucs naturels, par exemple par des procédés à base de chlorohydrine ou de bromohydrine.

Quelle que soit la variante mise en œuvre, le caoutchouc naturel époxydé ou le caoutchouc naturel préalablement époxydé peut présenter un taux d'époxydation inférieur ou égal à 50% mol, et de préférence supérieur ou égal à 0,5% mol, de préférence allant de 1 à 45% mol, de manière plus préférée de 2 à 30 % mol.

Par « taux d'époxydation » exprimé en pourcentage molaire (% mol), on entend le nombre de mole de motifs cis-1,4-polyisoprène-époxydés présent dans le polymère caoutchouc pour 100 moles de motifs monomères totaux dans ce même polymère. Le taux d'époxydation peut être mesuré notamment par analyse RMN ¹H. Par exemple, les motifs cis-1,4-polyisoprène, c'est-à-dire le motif CH₂-C(CH₃)=CH-CH₂, et les motifs cis-1,4-polyisoprène-époxydés du caoutchouc naturel époxydé ou du caoutchouc naturel préalablement époxydé sont quantifiés par intégration des massifs des signaux caractéristiques des protons du groupe CH du polyisoprène cis-1,4 à 5.1 ppm et des protons du groupe CHO du cycle époxy à 2.6 ppm.

Les deux mises en œuvre du procédé de modification conforme à l'invention sont équivalentes, c'est-à-dire que le caoutchouc naturel préalablement époxydé est équivalent au caoutchouc naturel qui a subi une réaction d'époxydation, si ce n'est qu'elles peuvent présenter des avantages différents. En particulier, la première mise en œuvre peut permettre d'accéder à des caoutchoucs naturels époxydés ayant un taux d'époxydation autre que ceux disponibles sur le marché, donc d'obtenir des taux d'époxydation à façon. La deuxième mise en œuvre du procédé conforme à l'invention est avantageuse lorsque le caoutchouc naturel au taux d'époxydation souhaité est disponible commercialement car elle peut permettre ainsi de réduire le nombre d'étapes du procédé.

Par soucis de simplification, on parlera dans la suite de la description de caoutchouc naturel époxydé indépendamment pour un caoutchouc naturel préalablement époxydé ou pour un caoutchouc naturel ayant subi une réaction d'époxydation.

L'autre composé essentiel du procédé de modification de l'invention est un composé 1,3-dipolaire ayant au moins un atome d'azote.

Par « composé 1,3-dipolaire », on entend au sens de la présente invention, tout composé chimique électriquement neutre portant au moins un dipôle, c'est-à-dire une charge positive et une charge négative dans l'une de leurs principales formules canoniques, et capable de former une cycloaddition dipolaire [1,3] sur une liaison carbone-carbone insaturée. Pour plus de détail, l'homme du métier peut se référer à la définition donnée par l'IUPAC (International Union of Pure And Applied Chemistry) dans le glossaire des noms de classes de composés organiques et des intermédiaires de réactivité basée sur la structure (IUPAC Recommendations 1995, PAC, 1995, 67, 1307).

Par « composé 1,3-dipolaire ayant au moins un atome d'azote », on entend au sens de la présente invention un composé 1,3-dipolaire dont le dipôle comprend au moins un atome d'azote.

Plus particulièrement, le composé 1,3-dipolaire ayant au moins un atome d'azote peut comprendre au moins un dipôle oxyde de nitrile, un dipôle imine de nitrile ou un dipôle nitrone.

Par oxyde de nitrile, on entend au sens de la présente invention un dipôle répondant à la formule -C≡N→O, y compris ses formes mésomères.

Par imine de nitrile, on entend au sens de la présente invention un dipôle répondant à la formule -C≡N→N, y compris ses formes mésomères.

Par nitrone, on entend au sens de la présente invention un dipôle répondant à la formule -C≡N(→O)-, y compris ses formes mésomères.

Préférentiellement, le composé 1,3-dipolaire ayant au moins un atome d'azote peut comprendre au moins un dipôle oxyde de nitrile.

Selon un mode de réalisation de l'invention, le dipôle oxyde de nitrile du composé 1,3-dipolaire peut appartenir à un motif répondant à la formule (I) telle que décrite ci-dessous. En d'autre termes, le dipôle oxyde de nitrile du composé 1,3-dipolaire peut être rattaché au restant dudit composé par un groupe phényle éventuellement substitué et peut appartenir ainsi à un groupement D répondant à la formule générale (I) : 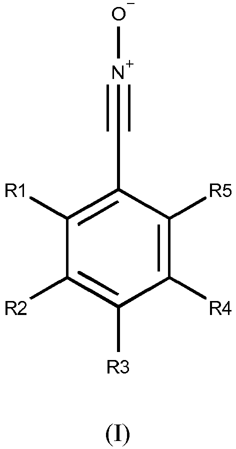 dans laquelle :
- R1, R2, R3, R4, R5, identiques ou différents, représentent un atome d'hydrogène, un atome d'halogène, un alkyle en C₁-C₅, un alcoxyle en C₁-C₅ ou une liaison covalente permettant le rattachement au reste du composé 1,3-dipolaire;
- à la condition qu'au moins un des R1, R2, R3, R4, R5 représente ladite liaison covalente.

L'homme du métier comprend que le composé 1,3-dipolaire selon ce mode de réalisation et ses variantes est composé du motif de formule (I) et d'un reste, également appelé reste du composé 1,3-dipolaire, reliés entre eux par ladite liaison covalente.

Plus préférentiellement, le groupement D peut répondre à la formule générale (I) dans laquelle :
- R1, R3, R5, identiques ou différents, représentent un atome d'hydrogène, un alkyle en C₁-C₅, un alcoxyle en C₁-C₅ ;
- R2, R4 représentent un atome d'hydrogène ou une liaison covalente permettant le rattachement au reste du composé 1,3-dipolaire;
- à la condition qu'au moins un des R2, R4 représente ladite liaison covalente et qu'au moins un des R1, R5 ne soit pas un atome d'hydrogène.

Plus préférentiellement encore, le groupement D peut répondre à la formule générale (I) dans laquelle :
- R1, R3, R5, identiques ou différents, représentent un atome d'hydrogène, un méthyle, un éthyle, un propyle, un méthyloxy, un éthyloxy, un propyloxy ;
- R2, R4 représentent un atome d'hydrogène ou une liaison covalente permettant le rattachement au reste du composé 1,3-dipolaire,
- à la condition qu'au moins un des R2, R4 représente ladite liaison covalente et qu'au moins un des R1, R5 ne soit pas un atome d'hydrogène.

Préférentiellement, le reste du composé 1,3-dipolaire est un groupe chimique destiné à être greffé sur le caoutchouc naturel époxydé par réaction de cycloaddition [3+2] du composé 1,3-dipolaire portant ledit groupe chimique sur les doubles liaisons de la chaîne du polymère.

Ainsi, le composé 1,3-dipolaire utilisé dans le cadre de l'invention peut être porteur à la fois d'un dipôle formé de trois atomes sur lesquels s'effectue la délocalisation des charges, dont au moins un est un atome d'azote, et à la fois d'au moins un groupe chimique destiné à être greffé sur le caoutchouc naturel époxydé. En d'autres termes, le composé 1,3-dipolaire comprend, en outre, au moins un groupe chimique.

Le groupe chimique peut être notamment tout groupe d'atomes qui une fois greffé sur le polymère permet d'en modifier les propriétés chimiques et physiques par rapport au polymère non greffé, notamment par exemple permet d'assurer une bonne interaction polymères-charges renforçantes lorsque le polymère est mélangé à des charges renforçantes.

De préférence, le groupe chimique peut être une chaîne hydrocarbonée pouvant éventuellement contenir au moins un hétéroatome. Par exemple, la chaîne hydrocarbonée peut être linéaire, cyclique et/ou ramifiée ; éventuellement interrompue par au moins un hétéroatome et/ou dans laquelle au moins un atome d'hydrogène porté par un atome de carbone a été substitué par un hétéroatome.

Plus préférentiellement, le groupe chimique peut être choisi parmi les groupes hydrocarbonés, les hétérocycles azotés ou soufrés éventuellement substitués, les esters, les phosphates, les dialkylamino et les groupes associatifs comprenant au moins un atome d'azote.

Avantageusement, le composé 1,3-dipolaire peut aussi être représenté par la formule suivante (II) :

G-E-D (II)

dans laquelle :
- le symbole G représente le groupe chimique tel que défini ci-dessus, y compris ses modes préférés;
- le symbole D représente le groupement de formule (I) définie ci-dessus, y compris ses modes préférés ; et
- le symbole E représente un espaceur reliant G à D.

Préférentiellement, le composé 1,3-dipolaire peut répondre à la formule (II) dans laquelle :
- le groupe chimique G peut être choisi parmi les groupes hydrocarbonés, les hétérocycles azotés éventuellement substitués, les hétérocycles soufrés éventuellement substitués, les esters, les phosphates, les dialkylamino et les groupes associatifs comprenant au moins un atome d'azote ;
- D et E étant définis ci-dessus.

Parmi les hétérocycles azotés ou soufrés peuvent convenir notamment ceux qui comprennent 5 à 6 membres. Ils peuvent être saturés ou insaturés et éventuellement être substitués par un groupe hydrocarboné en C₁-C₂₀. De préférence, les hétérocyles azotés ou soufrés peuvent être choisis parmi les cycles 2H-1,3-oxazolines éventuellement substitués, les cycles 2H-1,3-thiazolines éventuellement substitués, les cycles 5,6-dihydro-4H-1,3-oxazines éventuellement substitués, les cycles 5,6-dihydro-4H-1,3-thiazines éventuellement substitués, les cycles imidazoles éventuellement substitués, les substituants étant ceux définis ci-dessus.

Parmi les imidazoles éventuellement substitués peuvent convenir notamment ceux répondant à la formule générale (III) 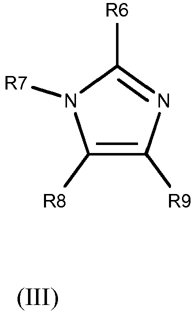 dans laquelle :
- R6, R7, R8, R9, identiques ou différents, représentent une liaison covalente qui relie le cycle imidazole à l'espaceur E, un atome d'hydrogène, un groupe hydrocarboné en C₁-C₂₀ ou bien R8 et R9 forment avec les atomes de carbone auxquels ils se rattachent un cycle aryle, et
- à la condition qu'au moins un des R6, R7, R8, R9 représente ladite liaison covalente.

De préférence, les imidazoles éventuellement substitués peuvent répondre à la formule (III) dans laquelle :
- R6, R7, R8, R9, identiques ou différents, représentent une liaison covalente qui relie le cycle imidazole à l'espaceur E, un atome d'hydrogène, un alkyle en C₁-C₁₂ (de préférence un alkyle en C₁-C₆) ou bien R8 et R9 forment avec les atomes de carbone auxquels ils se rattachent un noyau benzénique, et
- à la condition qu'au moins un des R6, R7, R8, R9 représente ladite liaison covalente.

Parmi les esters peuvent convenir notamment ceux répondant à la formule C(O)-O-R10 avec R10 représentant un groupe hydrocarboné en C₁-C₂₀, de préférence en groupe hydrocarboné C₁-C₁₂, de manière plus préférée représentant en groupe hydrocarboné C₁-C₆. De préférence, R10 est un alkyle en C₁-C₆, de manière plus préférée R10 est un méthyle ou un éthyle.

Parmi les phosphates peuvent convenir notamment ceux répondant à la formule-O-P(O)(OR11)(OR12) avec R11 et R12, identiques ou différents, représentant un atome d'hydrogène, un alkyle, un aryle ou un alkylaryle. De préférence, R11 et R12 sont identiques et sont un alkyle en C₁-C₁₂, de préférence un alkyle en C₁-C₆, de préférence un méthyle ou un éthyle.

Parmi les groupes dialkylamino peuvent notamment convenir ceux répondant à la formule -NR13R14 dans lequel R13 et R14, identiques ou différents, représentent un alkyle en C₁-C₆. On peut citer, par exemple, un groupe N,N-diméthylamino, un groupe N,N-diéthylamino, un groupe N-éthyl,N-propylamino. De préférence, R13 et R14 sont identiques et sont un méthyle.

Par « groupe associatif », on entend des groupes susceptibles de s'associer les uns avec les autres par des liaisons hydrogène, ioniques ou hydrophobes. Selon un mode préféré de l'invention, il s'agit de groupes susceptibles de s'associer par des liaisons hydrogènes.

Lorsque les groupes associatifs sont susceptibles de s'associer par des liaisons hydrogène, chaque groupe associatif comporte au moins un site donneur et un site accepteur vis-à-vis de la liaison hydrogène de sorte que deux groupes associatifs identiques sont auto-complémentaires et peuvent s'associer entre eux en formant au moins deux liaisons hydrogène. Les groupes associatifs sont notamment susceptibles de s'associer par des liaisons hydrogènes à des fonctions présentes sur tout autre composé, par exemple sur des charges renforçantes notamment telles que la silice ou le noir de carbone.

Préférentiellement, le groupe associatif comprenant au moins un atome d'azote peut être choisi parmi les formules (IV), (V) (VI), (VII) et (VIII) suivantes : 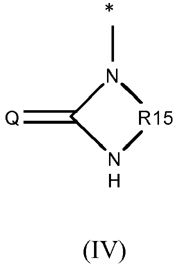 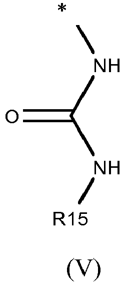 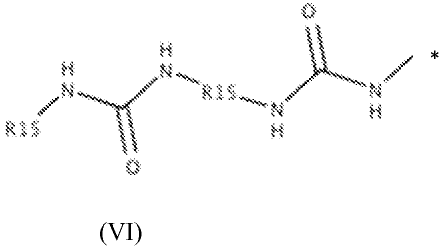 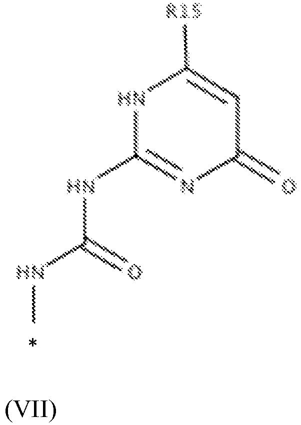 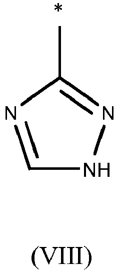 dans lesquelles:
- R15 représente un groupe hydrocarboné pouvant éventuellement contenir des hétéroatomes,
- Q représente un atome d'oxygène ou de soufre ou NH, de préférence un atome d'oxygène,
- le symbole * représente un rattachement indirect au dipôle du composé 1,3 dipolaire, notamment à E.

Préférentiellement, le groupe associatif comprenant au moins un atome d'azote est un hétérocycle de formule (IV), di ou triazoté, à 5 ou 6 atomes, de préférence diazoté, et comprenant au moins une fonction carbonyle .

L'espaceur E peut être une liaison covalente, un atome ou un groupement d'atomes et permet de relier au moins un groupe chimique G à au moins un groupement D. Lorsque E est un groupement d'atomes, il peut être ainsi tout type de groupement d'atomes connus en soi. L'espaceur E ne doit pas, ou peu, interférer avec le ou les dipôles et le ou les groupes chimiques du composé 1,-3 dipolaire destinés à être greffés. L'espaceur peut être donc considéré comme un groupement inerte, c'est-à-dire qu'il ne présente pas de fonctions alcényle ou alcynyle, susceptibles de réagir avec le ou les dipôles ni de groupes associatifs tels que définis ci-dessus.

L'espaceur E peut être de préférence une chaîne hydrocarbonée, linéaire, ramifiée, cyclique, éventuellement substituée, pour autant que les substituants soient inertes vis-à-vis du ou des dipôles et de la ou des fonctions à greffer. La chaîne hydrocarbonée peut comprendre un ou plusieurs hétéroatomes. De manière préférée, l'espaceur E est un alcanediyle en C₁-C₂₀, -OR16- , -C(O)-N(H)R16-, -N(H)R16-avec R16 un alcanediyle en C₁-C₂₀. De manière préférée, l'espaceur E peut être un alcanediyle en C₁-C₆, -OR16-, -C(O)-N(H)R16-, -N(H)R16- avec R₁₆ un alcanediyle en C₁-C₆. A titre d'exemples d'alcanediyle en C₁-C₆, on peut citer notamment un groupe méthylène -CH₂-, un groupe éthylène -CH₂-CH₂-, un groupe propylène -CH₂-CH₂-CH₂-, un groupe butylène -CH₂-CH₂-CH₂-CH₂-, etc.

Selon un mode de réalisation préféré de l'invention, le composé 1,3-dipolaire peut répondre à la formule (II)

G-E-D (II)

dans laquelle :
- D répond à la formule (I) dans laquelle :
   - R1, R3, R5, identiques ou différents, représentent un atome d'hydrogène, un alkyle en C₁-C₅, un alcoxyle en C₁-C₅ ;
   - R2, R4 représentent une liaison covalente permettant le rattachement à E ou un atome d'hydrogène ;
   - à la condition qu'au moins un des R2, R4 représente ladite liaison covalente et qu'au moins un des R1, R5 ne soit pas un atome d'hydrogène ;
- G représente un groupe hydrocarboné, un hétérocycle azoté ou soufré de 5 à 6 membres éventuellement substitué, un ester, un phosphate, un dialkylamino ou un groupe associatif comprenant au moins un atome d'azote,
- E représente une liaison covalente ou une chaîne hydrocarbonée éventuellement substituée et éventuellement interrompue par un ou plusieurs hétéroatomes.

Selon un autre mode de réalisation préféré de l'invention, le composé 1,3-dipolaire peut répondre à la formule (II) dans laquelle :G-E-D (II)
- D répond à la formule (I) dans laquelle :
   - R1, R3, R5, identiques ou différents, représente un atome d'hydrogène, un méthyle, un éthyle, un propyle, un méthyloxy, un éthyloxy, un propyloxy ;
   - R2, R4 représentent une liaison covalente permettant le rattachement à E ou un atome d'hydrogène ; et
   - à la condition qu'au moins un des R2, R4 représente ladite liaison covalente et qu'au moins un des R1, R5 ne soit pas un atome d'hydrogène;
- G est choisi dans le groupe formé par
   - les groupes hydrocarbonés,
   - les esters répondant à la formule C(O)-O- R10 avec R10 représentant un groupe hydrocarboné en C₁-C₂₀, de préférence un groupe hydrocarboné en C₁-C₁₂, de manière plus préférée représentant un groupe hydrocarboné en C₁-C₆, de manière encore plus préférée R10 est un alkyle en C₁-C₆, mieux R10 est un méthyle ou un éthyle ;
   - les phosphates -O-P(O)(OR11)(OR12) avec R11 et R12, identiques ou différents, représentant un atome d'hydrogène, un alkyle, un aryle ou un alkylaryle, de préférence, R11 et R12 identiques étant un alkyle en C₁-C₁₂, plus préférentiellement un alkyle en C₁-C₆, de manière encore plus préférée un méthyle ou un éthyle ;
   - les dialkylaminos NR13R14 dans lequel R13 et R14, identiques ou différents, représentent un alkyle en C₁-C₆, de préférence R13 et R14 sont identiques et sont méthyle ;
   - les imidazoles de formule (III) dans laquelle R6, R7, R8, R9, identiques ou différents, représentent une liaison covalente qui relie le cycle imidazole à l'espaceur E, un atome d'hydrogène, un alkyle en C₁-C₁₂ (de préférence un alkyle en C₁-C₆) ou bien R8 et R9 forment avec les atomes de carbone auxquels ils se rattachent un noyau benzénique, et à la condition qu'au moins un des R6, R7, R8, R9 représente ladite liaison covalente ; et
   - les groupes associatifs comprenant au moins un atome d'azote et étant choisis parmi les formules (IV), (V) (VI), (VII) et (VIII), étant de préférence un hétérocycle de formule (IV)) di ou triazoté, à 5 ou 6 atomes, de préférence diazoté, et comprenant au moins une fonction carbonyle ;
- E représente une liaison covalente ou un groupe d'atomes choisis parmi les alcanediyles en C₁-C₂₀, les groupes -OR16-, les groupes -C(O)-N(H)R16-, les groupes -N(H)R16- avec R16 un alcanediyle en C₁-C₂₀, de préférence avec R16 un alcanediyle en C₁-C₁₀.

Selon un mode particulier de l'invention, le composé 1,3-dipolaire préféré peut être notamment choisi parmi les composés répondant aux formules ci-dessous (IX), (X), (XI), (XII), (XIII), (XIV), (XV), (XVI), (XVII), (XVIII), (XIX) et leurs formes mésomères:

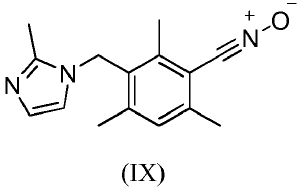

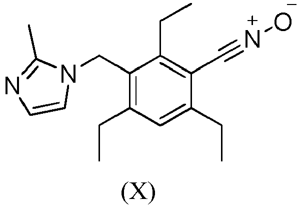

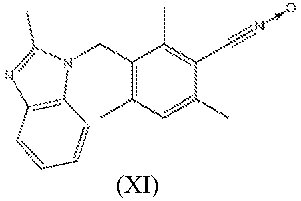

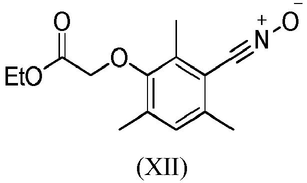

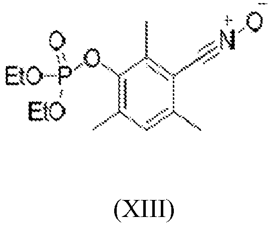

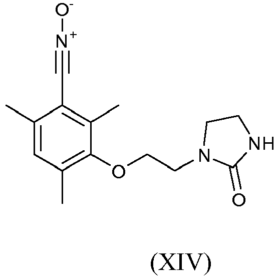

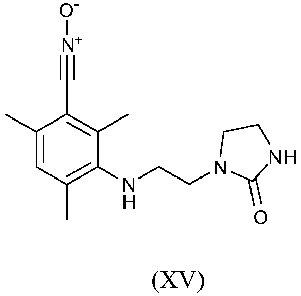

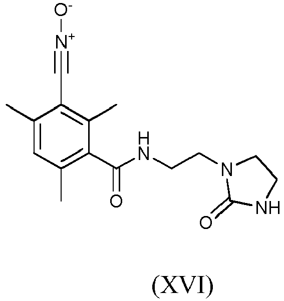

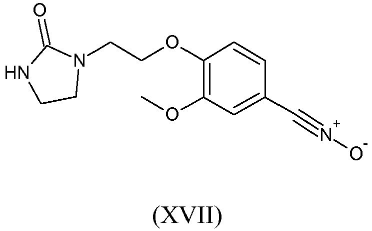

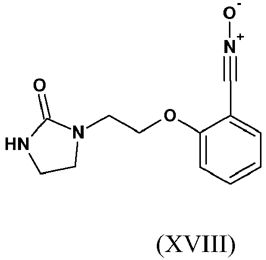

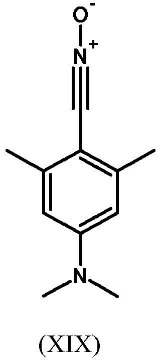

Le composé 1,3-dipolaire plus particulièrement préféré peut être notamment choisi parmi les composés répondant aux formules ci-dessus (IX), (X), (XI), (XII), (XIII), (XIV), (XV), (XVI), et (XIX), y compris leurs formes mésomères.

Le composé 1,3-dipolaire encore plus particulièrement préféré peut être le composé de formule (XIV) ou le composé de formule (XIX).

Dans la suite de la présente description par souci de simplification, on emploiera l'expression « composé 1,3 dipolaire » pour désigner le composé 1,3-dipolaire ayant au moins un atome d'azote utilisé dans le procédé conforme à l'invention, ainsi que ses formes préférées.

Le composé 1,3-dipolaire peut être synthétisé par toutes réactions chimiques bien connues de l'homme du métier. A titre d'exemple, on pourra se référer aux procédés de synthèse décrits dans les demandes PCT/EP2015/060926, PCT/EP2015/060926, FR 15/56565, WO-A2-2006/045088, FR15/51635, WO-A1-2015/059269, WO-A1-2015/059271, WO-A1-2012/007684, WO-A1-2012/007441, WO-A1-2012/007442 et WO-A1-2014/090756.

En particulier, le composé 1,3 dipolaire porteur à la fois d'un dipôle oxyde de nitrile et d'un groupe dialkylamino peut être obtenu par exemple selon la procédure décrite dans l'article J. Org. Chem., 1967, 32 (7), pp 2308-2312.

Le greffage du composé 1,3-dipolaire sur le caoutchouc naturel époxydé s'effectue par réaction dudit caoutchouc naturel époxydé avec le composé 1,3-dipolaire tel que défini ci-dessus. Lors de la réaction, le dipôle du composé 1,3-dipolaire forme des liaisons covalentes avec la chaîne du caoutchouc naturel époxydé. Le rendement de greffage est particulièrement élevé, préférentiellement supérieur à 60%. Par « rendement de greffage » ou par « rendement », on entend le taux en pourcentage molaire de composé 1,3-dipolaire greffé sur la chaîne du caoutchouc naturel époxydé par rapport au taux en pourcentage molaire de composé 1,3-dipolaire introduit comme réactif de départ.

Par « taux molaire du composé 1,3-dipolaire », on entend le nombre de moles de composé 1,3-dipolaire utilisées pour 100 motifs de caoutchouc naturel époxydé, c'est-à-dire pour 100 unités monomères du caoutchouc naturel époxydé (unité monomère isoprène et unité monomère isoprène époxydée). Par exemple, si le taux de composé 1,3-dipolaire est de 1% mol pour un caoutchouc naturel époxydé à 50% d'époxyde, cela signifie qu'il y a 1 mole de composé 1,3-dipolaire pour 100 unités isoprène, époxydées ou non-époxydées.

Le greffage du composé 1,3-dipolaire est effectué par cycloaddtion [3+2] du dipôle du composé 1,3 dipolaire sur une insaturation, notamment une double liaison carbone-carbone, de la chaîne du caoutchouc naturel époxydé. Le mécanisme de la cycloaddition peut être illustré par les schémas réactionnels génériques suivants :
- Cycloaddition d'un oxyde de nitrile sur une insaturation ou double liaison du polymère (ici une unité isoprène) 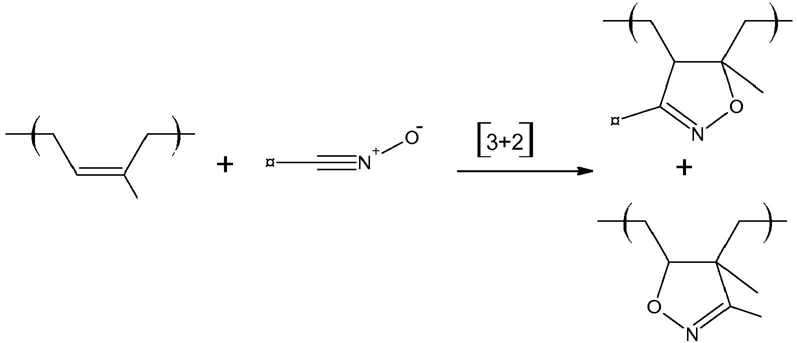
- Cycloaddition d'une nitrone sur une insaturation ou double liaison du polymère (ici une unité isoprène) 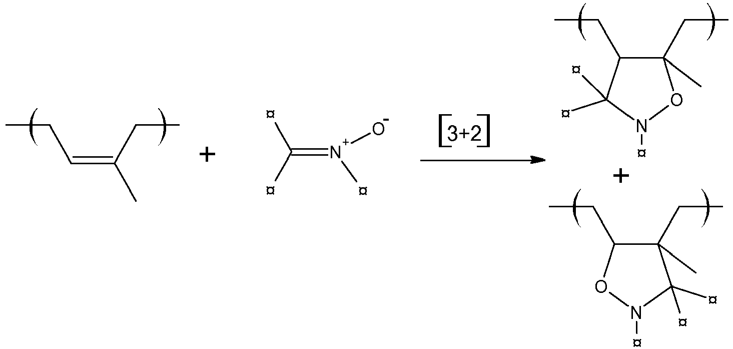
- Cycloaddition d'un nitrile imine sur une insaturation ou double liaison du polymère (ici une unité isoprène)

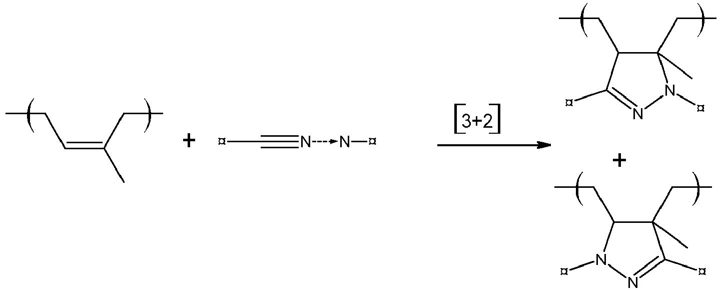

Le greffage du composé 1,3-dipolaire peut être réalisé en masse, par exemple dans un mélangeur interne ou un mélangeur externe tel qu'un mélangeur à cylindres. Il peut aussi être réalisé en solution, en continu ou en discontinu. Le caoutchouc naturel modifié peut être séparé de sa solution par tout type de moyen connu par l'homme de l'art et en particulier par une opération de stripping à la vapeur d'eau.

Selon un mode de réalisation, la réaction de greffage peut s'effectuer en chauffant le mélange réactionnel à une température supérieure ou égale à 70°C, et de préférence pendant au plus 4 heures ; préférentiellement pendant au plus 2 heures et encore plus préférentiellement pendant au plus 30 minutes.

Selon un mode de réalisation de l'invention, le taux (en pourcentage molaire (% mol)) du composé 1,3-dipolaire peut aller de 0,1 à 10 % mol, de préférence de 0,1 à 5 % mol.

Un autre objet de la présente invention concerne un caoutchouc naturel modifié susceptible d'être obtenu, notamment étant obtenu, selon l'un quelconque des modes de réalisation du procédé de modification, y compris ses modes préférés.

Ce caoutchouc naturel modifié peut comprendre, distribuées statistiquement au sein de la chaîne, des unités cis-1,4 isoprène, des unités cis-1,4 isoprène époxydées et des unités résultant de la cycloaddition [3+2] d'au moins un composé 1,3-dipolaire tel que défini ci-dessus.

Le caoutchouc naturel modifié de l'invention est particulièrement adapté pour être utilisé en composition de caoutchouc renforcée destinée à la fabrication de produits semi-finis et finis tels que des pneumatiques. En effet, la présence sur l'élastomère de cycle époxy et de groupes chimiques, notamment de groupes chimiques susceptibles d'interagir avec une charge renforçante, améliore des performances du pneumatique, notamment les performances adhérence et de résistance au roulement.

Ainsi, un autre objet de la présente invention concerne une composition de caoutchouc à base :
- d'au moins un caoutchouc naturel modifié susceptible d'être obtenu ou obtenu par le procédé décrit ci-dessus quelle que soit la variante du procédé mise en œuvre,
- d'au moins une charge renforçante, et
- d'au moins un système de réticulation.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

Le caoutchouc naturel modifié peut être constitué, selon l'invention, d'un mélange de plusieurs caoutchoucs naturels modifiés conformes à l'invention.

Selon un mode de réalisation de l'invention, la composition de caoutchouc peut également, outre le caoutchouc naturel modifié, comprendre au moins un autre élastomère diénique. Ce ou ces autres élastomères diéniques peuvent alors être présents dans la composition dans des proportions comprises entre 0 et 60 pce (les bornes de ce domaine étant exclues), préférentiellement au plus 49 pce, encore plus préférentiellement au plus 30 pce.

Selon un mode de réalisation de l'invention, la fraction massique du caoutchouc naturel modifié dans la composition peut être majoritaire. En d'autres termes, le caoutchouc naturel modifié peut représenter au moins 51 % de la masse totale de l'ensemble des élastomères présents dans la composition. De préférence, le taux de caoutchouc naturel modifié peut être d'au moins 51 pce, en particulier d'au moins 70 pce.

Selon un autre mode de réalisation de l'invention, le taux de caoutchouc naturel modifié peut aller de 51 pce à 100 pce, de préférence ce taux peut être égal à 100 pce.

Par « élastomère diénique », doit être compris selon l'invention tout élastomère d'origine synthétique constitué au moins en partie (c'est-à-dire un homopolymère ou un copolymère) de monomère(s) diène(s) (i.e., porteur(s) de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique « fortement insaturé » un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère d'un monomère diène conjugué, notamment tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

Dans le cas de copolymères de type (b), ceux-ci contiennent de 20 % à 99 % en masse d'unités diéniques, et de 1 à 80 % en masse d'unités vinylaromatiques.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Préférentiellement, l'élastomère diénique peut être choisi dans le groupe des élastomères diéniques fortement insaturés constitué par les polybutadiènes (BR), les copolymères de butadiène, les polyisoprènes (PI), les copolymères d'isoprène et les mélanges de ces élastomères. De tels copolymères peuvent être plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

Ces élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères diéniques peuvent être par exemple à blocs, statistiques, séquencés, microséquencés, et être préparés en dispersion ou en solution.

L'élastomère diénique peut être étoilé, couplé, fonctionnalisé ou non, de manière connue en soi, au moyen d'agents de fonctionnalisation, de couplage ou d'étoilage connus de l'homme de l'art.

La composition de caoutchouc conforme à l'invention comprend au moins une charge renforçante par exemple du noir de carbone ou une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple demandes WO-A2-97/36724 ou WO-A1-99/16600).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface, nécessitant pour être utilisée à titre de charge renforçante l'emploi d'un agent ou système de couplage destiné à assurer une liaison chimique stable la charge et la matrice élastomérique.

Comme charges renforçantes inorganiques conviennent notamment des charges minérales du type siliceuse tel que la silice. La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » ainsi que la silice « Zeosil Premium 200 » de la société Solvay, la silice « Hi-Sil EZ150G » de la société PPG, les silices « Zeopol 8715, 8745 et 8755 » de la Société Huber, les silices à haute surface spécifique telles que décrites dans la demande WO-A1-03/016387.

Dans le présent exposé, la surface spécifique BET est déterminée de manière connue par adsorption de gaz à l'aide de la méthode de Brunauer-Emmett-Teller décrite dans « The Journal of the American Chemical Society » Vol. 60, page 309, février 1938, plus précisément selon la norme française NF ISO 9277 de décembre 1996 (méthode volumétrique (5 point- gaz : azote - dégazage : 1heure à 160°C - domaine de pression relative p/po : 0.05 à 0.17). La surface spécifique CTAB est la surface externe déterminée selon la norme française NF T45-007 de novembre 1987 (méthode B).

Bien entendu, on entend également par charge renforçante inorganique des mélanges de différentes charges inorganiques renforçantes, en particulier de silices hautement dispersibles telles que décrites ci-dessus ou un mélange de charges inorganique de type siliceuse et de charges inorganique non siliceuse. A titre de charges inorganique non siliceuse, on peut citer les charges minérales du type alumineuse, en particulier de l'alumine (Al₂O₃) ou des (oxydes)hydroxydes d'aluminium, ou encore des oxydes de titane renforçants, par exemple décrits dans US-B1-6,610,261 et US-B2-6,747,087. Les charges inorganiques non siliceuses, lorsque présentent, sont minoritaires dans la charge renforçante.

L'état physique sous lequel se présente la charge renforçante est indifférent, que ce soit sous forme de poudre, de microperles, de granulés, de billes ou toute autre forme densifiée appropriée. Bien entendu on entend également par charge renforçante des mélanges de différentes charges renforçantes, en particulier de charges siliceuses et/ou alumineuses hautement dispersibles telles que décrites ci-après.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO-A2-96/37547, WO-A1-99/28380.

Selon un mode de réalisation de l'invention, la charge renforçante peut être majoritairement constituée de noir de carbone, de préférence elle peut comprendre au moins 51% en poids de noir de carbone par rapport au poids total de la charge renforçante. Préférentiellement, la charge renforçante peut être constituée à 100% en poids de noir de carbone par rapport au poids total de la charge renforçante.

Si la charge renforçante comprend moins de 100% en poids de noir de carbone par rapport au poids total de la charge renforçante, le complément de charge est apporté par au moins une autre charge renforçante, notamment une charge renforçante inorganique telle que la silice.

Selon un autre mode de réalisation de l'invention, la charge renforçante peut être majoritairement une charge inorganique renforçante, c'est-à-dire une charge renforçante autre que du noir de carbone. Elle peut comprendre préférentiellement plus de 51% en poids, par rapport au poids total de la charge renforçante, d'une ou de plusieurs charge(s) inorganique(s) renforçante(s), notamment une charge inorganique renforçante telle que la silice. Préférentiellement la charge renforçante peut être exclusivement constituée d'une charge renforçante inorganique, notamment exclusivement constituée de silice. Autrement dit la charge renforçante peut être constituée de 100% en poids par rapport au poids total de la charge renforçante d'une charge inorganique renforçante telle que de la silice.

Si la charge renforçante comprend moins de 100% en poids de charge renforçante inorganique par rapport au poids total de la charge renforçante, le complément de charge est apporté par au moins une autre charge renforçante, telle que par exemple du noir de carbone. Selon cette variante, lorsque le noir de carbone est présent, il peut être utilisé dans la composition à un taux inférieur à 20 pce, plus préférentiellement inférieur à 10 pce (par exemple peut aller de 0,5 à 20 pce, notamment peut aller de 2 à 10 pce).

De manière préférentielle, le taux de charge renforçante totale (c'est-à-dire selon les variantes le taux de noir de carbone, le taux de charge renforçante inorganique telle que la silice ou le taux de noir de carbone et de charge renforçante inorganique telle que la silice) peut aller de 30 à 200 pce, plus préférentiellement de 40 à 150 pce. L'homme du métier sait adapter ce taux de charge renforçante totale dans la composition en fonction des différentes applications particulières visées.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A1-2006/069792, WO-A1-2006/069793, WO-A1-2008/003434 et WO-A1-2008/003435.

Lorsque la charge renforçante comprend une charge nécessitant l'utilisation d'un agent de couplage pour établir la liaison entre la charge et le caoutchouc naturel modifié et entre la charge et l'autre élastomère diénique lorsqu'il est présent, la composition de caoutchouc selon l'invention peut comprendre en outre, de manière classique, un agent susceptible d'assurer efficacement cette liaison. Lorsque la silice est présente dans la composition à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et le caoutchouc naturel modifié et entre la charge et l'autre élastomère diénique lorsqu'il est présent, en particulier des organosilanes ou des polyorganosiloxanes bifonctionnels.

A titre d'agent de couplage, on peut notamment cités des silanes polysulfurés, dits "symétriques" ou "asymétriques" selon leur structure particulière, tels que décrits par exemple dans les demandes WO-A1-03/002648 (ou US-A1-2005/016651) et WO-A1-03/002649 (ou US-A1-2005/016650).

Conviennent en particulier, sans que la définition ci-après soit limitative, des silanes polysulfurés répondant à la formule générale (XX) suivante:

Z-A-Sₓ-A-Z (XX)

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 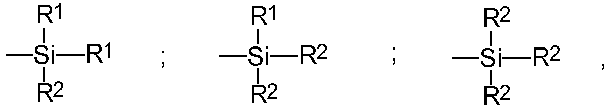 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (XX) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO-A1-02/083782 précitée (ou US-B2-7,217,751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule (XX) ci-dessus) tels que décrits par exemple dans les demandes de brevet WO-A1-02/30939 (ou US-B1-6,774,255), WO-A1-02/31041 (ou US-A1-2004/051210), et WO-A1-2007/061550, ou encore des silanes ou POS porteurs de groupements fonctionnels azo-dicarbonyle, tels que décrits par exemple dans les demandes de brevet WO-A1-2006/125532, WO-A1-2006/125533, WO-A1-2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US-B2-6,849,754, WO-A1-99/09036, WO-A2-2006/023815, WO-A2-2007/098080, WO-A1-2010/072685 et WO-A2-2008/055986.

Bien entendu pourraient être également utilisés des mélanges des agents de couplage précédemment décrits, comme décrit notamment dans la demande WO-A1-2006/125534 précitée.

La teneur en agent de couplage peut être avantageusement inférieure à 20 pce, étant entendu qu'il est en général souhaitable d'en utiliser le moins possible. Typiquement le taux d'agent de couplage peut représenter de 0,5% à 15% en poids par rapport à la quantité de charge inorganique. Son taux est préférentiellement peut aller de 0,5 à 12 pce, plus préférentiellement peut être compris dans un domaine allant de 3 à 10 pce. Ce taux peut être aisément ajusté par l'homme du métier selon le taux de charge inorganique utilisé dans la composition. Ces plages préférentielles s'appliquent à l'un quelconque des modes de réalisation de l'invention.

La composition selon l'invention peut également contenir, en complément des agents de couplage, des activateurs de couplage de la charge renforçante ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30 °C, telles que décrites par exemple dans les demandes WO-A1-2005/087859, WO-A1-2006/061064 et WO-A1-2007/017060, et les mélanges de tels composés.

La composition selon l'invention comprend un système de réticulation chimique qui permet la formation de liaisons covalentes entre les chaînes d'élastomères. Le système de réticulation chimique peut être un système de vulcanisation ou un système à un ou plusieurs composés peroxydes.

Selon une première variante préférée, le système de réticulation est un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il peut être utilisé à un taux préférentiel allant de 0,5 à 12 pce, en particulier de 1 à 10 pce. Ces plages préférentielles s'appliquent à l'un quelconque des modes de réalisation de l'invention. L'accélérateur primaire de vulcanisation peut être utilisé à un taux préférentiel allant de 0,5 à 10 pce, plus préférentiellement de 0,5 à 5,0 pce. Ces plages préférentielles s'appliquent à l'un quelconque des modes de réalisation de l'invention.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

Selon une deuxième variante, lorsque la réticulation chimique est effectuée au moyen d'un ou plusieurs composés peroxydes, le taux dudit ou desdits composés peroxydes peut aller de 0,01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde). Le ou les composés peroxydes peuvent être incorporés au cours de la phase productive telle que décrite ultérieurement.

Un autre objet de l'invention concerne un procédé de préparation de la composition de caoutchouc décrite ci-dessus.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale allant de 130°C à 200°C, de préférence allant de 145°C à 185°C, suivie d'une seconde phase de travail mécanique (parfois qualifiée de phase "productive") à plus basse température, typiquement inférieure à 120°C, par exemple allant de 60°C à 100°C, phase de finition au cours de laquelle est incorporé le système de réticulation chimique.

De manière générale, tous les constituants de base de la composition de l'invention, à l'exception du système de réticulation chimique, à savoir la ou les charges renforçantes, l'agent de couplage le cas échéant, peuvent être incorporés de manière intime, par malaxage, au caoutchouc naturel modifié et aux autres élastomères diéniques présents le cas échéant ou au caoutchouc naturel époxydé ou préalablement époxydé en présence d'au moins un composé 1,3-dipolaire, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale allant de 130°C à 200°C, de préférence allant de 145°C à 185°C. Cette première phase est ensuite suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation chimique.

Après l'incorporation de tous les ingrédients de la composition de caoutchouc, la composition finale ainsi obtenue peut être ensuite calandrée, par exemple sous la forme d'une feuille ou d'une plaque, notamment pour une caractérisation au laboratoire, ou encore extrudée, pour former par exemple un profilé de caoutchouc utilisé comme produit fini ou semi-fini.

Selon un mode de réalisation de l'invention, le greffage du composé 1,3-dipolaire tel que défini précédemment sur le caoutchouc naturel époxydé ou préalablement époxydé peut être effectué préalablement, selon le procédé de l'invention, à la préparation de la composition de caoutchouc. Ainsi, c'est le caoutchouc naturel modifié qui est introduit au cours de la première phase dite non-productive.

Ainsi, selon ce mode de réalisation du procédé, celui-ci peut comprendre au moins les étapes suivantes:
- incorporer au caoutchouc naturel modifié, au moins une charge renforçante et notamment tous les autres constituants de la composition lorsqu'ils sont présents, à l'exception du système de réticulation, en malaxant thermomécaniquement le tout, en une ou plusieurs fois, jusqu'à atteindre une température maximale allant de 130°C à 200°C, de préférence allant de 145°C à 185°C,
- refroidir l'ensemble à une température inférieure à 100°C,
- incorporer ensuite au moins un système de réticulation chimique,
- malaxer le tout jusqu'à une température maximale inférieure à 120°C,
- extruder ou calandrer la composition de caoutchouc ainsi obtenue.

Selon un autre mode de réalisation de l'invention, le greffage du composé 1,3-dipolaire tel que défini précédemment sur le caoutchouc naturel époxydé ou préalablement époxydé peut être effectué concomitamment à la préparation de la composition de caoutchouc. Dans ce cas, le caoutchouc naturel époxydé ou le caoutchouc naturel préalablement époxydé et le composé 1,3-dipolaire sont introduits au cours de la première phase dite non-productive. De manière préférentielle, la charge renforçante et l'autre élastomère diénique lorsqu'il est éventuellement présent, sont alors ajoutés subséquemment au cours de cette même phase non-productive afin de prévenir toute réaction parasite avec le composé 1,3-dipolaire.

Ainsi, dans ce deuxième mode de réalisation du procédé, celui-ci peut comprendre au moins les étapes suivantes :
- disposer d'au moins un caoutchouc naturel et époxyder ledit caoutchouc naturel pour obtenir un caoutchouc naturel époxydé, ou disposer d'un caoutchouc naturel préalablement époxydé,
- incorporer au caoutchouc naturel époxydé ou au caoutchouc naturel préalablement époxydé, au moins un composé 1,3-dipolaire ayant au moins un atome d'azote, et tel que décrit ci-dessus,
- incorporer subséquemment au moins une charge renforçante, et éventuellement tous les constituants de la composition, à l'exception du système de réticulation chimique, en malaxant thermomécaniquement le tout, en une ou plusieurs fois, jusqu'à atteindre une température maximale allant de 130°C à 200°C, de préférence allant de 145°C à 185°C,
- refroidir l'ensemble à une température inférieure à 100°C,
- incorporer ensuite au moins un système de réticulation chimique,
- malaxer le tout jusqu'à une température maximale inférieure à 120°C,
- extruder ou calandrer la composition de caoutchouc ainsi obtenue.

Dans ce mode de réalisation, l'incorporation d'au moins un composé 1,3-dipolaire au caoutchouc naturel époxydé ou au caoutchouc naturel préalablement époxydé peut s'effectuer à une température supérieure ou égale à 70°C.

L'homme du métier comprendra que lorsque la composition de caoutchouc comprend au moins un autre élastomère diénique tel que décrit précédemment, la composition de caoutchouc peut être préférentiellement fabriquée selon le premier mode de réalisation du procédé afin d'éviter toute réaction parasite entre cet autre élastomère diénique et le composé 1,3-dipolaire.

L'invention a également pour objet un produit fini ou semi-fini en caoutchouc comprenant au moins une composition de caoutchouc selon l'invention ou susceptible d'être obtenu selon l'un des procédés de l'invention, plus particulièrement un produit fini ou semi-fini en caoutchouc pour pneumatique. Les variantes et les modes préférés de la composition de caoutchouc de l'invention s'appliquent au produit fini ou semi-fini. Un produit semi-fini peut par exemple être une bande de roulement.

L'invention a également pour objet un pneumatique qui comprend au moins un produit semi-fini tel que décrit ci-dessus.

Les caractéristiques précitées de la présente invention, ainsi que d'autres, seront mieux comprises à la lecture de la description suivante de plusieurs exemples de réalisation de l'invention, donnés à titre illustratif et non limitatif.

### EXEMPLES DE REALISATION

### 1-. Origine des réactifs, préparation des NR et caractérisations

### 1.1 Origines des réactifs

L'eau oxygénée (30 % massique dans l'eau) et l'acide formique (à 95%) proviennent de chez Aldrich. Le polyisoprène NIPOL 2200 provient de chez Nippon Zeon.

### 1.2 Préparation des oxydes de nitrile

### a) Synthèse du 2,4,6-triméthylphényl-3-(2-(2-oxoimidazolidin-1-yl)éthoxy) nitriloxide (composé A)

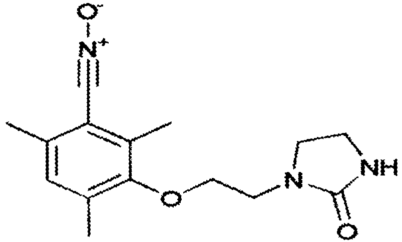

La synthèse de ce composé est décrite dans le brevet FR2962737.

### b) Synthèse du N,N,3,5-tétraméthyl-4-[(oxido-λ5-azanylidyne) méthyl]aniline (composé B)

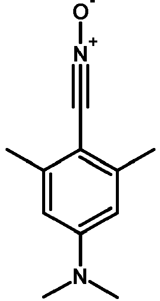

La synthèse du composé B est décrite dans l'article J. Org. Chem., 1967, 32 (7), pp 2308-2312

### 1.3 Préparation des caoutchoucs naturels

Un caoutchouc naturel déprotéiné (NR déprotéiné) et un caoutchouc naturel plastifié (NR plastifié) sont utilisés à titre de comparaison.

Le caoutchouc NR déprotéiné est issu d'un latex de caoutchouc naturel qui a subi cinq centrifugations successives puis un séchage à 65°C sous vide partiel et balayage d'azote pendant 48 heures.

Le caoutchouc NR plastifié est préparé selon les méthodes classiques décrites dans les demandes de brevet suivantes FR1377363, FR2391225, KR2009033559, JP200241407.

Le caoutchouc naturel est époxydé selon la procédure suivante pour obtenir des caoutchoucs naturels époxydés à 25+/2 % molaire (ENR 25% molaire (ENR 25)) :

La première étape consiste à dévolatiliser l'ammoniaque d'un latex d'un caoutchouc naturel dit HA. Pour se faire, le latex à 60% massique de polyisoprène est laissé sous agitation modérée pendant 24 heures (jusqu'à neutralisation du pH) en présence de 3 pce de tensioactif non ionique pour le stabiliser. Une fois cette étape effectuée, de l'acide formique pur ([HCOOH] / [motif de polyisoprène] = 0,3) est ajouté goutte à goutte (pendant au minimum 15 minutes). Le milieu réactionnel est ensuite chauffé à 53°C avant d'ajouter l'eau oxygénée (H₂O₂ à 30% massique). La quantité d'H₂O₂ ajoutée est dépendante du taux d'époxydation visé (voir tableau 1). Après 24 heures d'agitation à 53°C, la réaction chimique est stoppée par refroidissement à température ambiante puis par neutralisation à la soude (1.3 équivalents). Le latex est ensuite déstabilisé par addition de vapeur (stripping) pendant 30 minutes, puis crêpé, lavé à l'eau et séché pendant 48 h à 65°C sous vide partiel et sous balayage d'azote.

**Tableau 1.**

| % molaire d'époxy visé | ([H2O2] / [motif de polyisoprène] | % mol epoxy (RMN) |
|---|---|---|
| 25 | 0,3 | 27 |

Le pourcentage molaire de cycle époxy obtenu à l'issue du traitement est déterminé par RMN selon la méthode décrite ci-dessous.

### 1.4 Mesures et tests utilisés

Les élastomères et compositions de caoutchouc sont caractérisés, avant et après cuisson, comme indiqué ci-après.

### 1.4.1 - Détermination du taux d'époxyde

La détermination du taux d'époxyde est réalisée par une analyse RMN. Les spectres sont acquis sur un spectromètre Avance 500 MHz BRUKER équipé d'une sonde « large bande » BBIz-grad 5 mm pour les échantillons solubles et sur un spectromètre Avance 500MHz BRUKER équipé d'une sonde HRMAS 4mm ¹H/¹³C pour les échantillons insolubles. L'expérience RMN ¹H quantitative, utilise une séquence simple impulsion 30° et un délai de répétition de 5 secondes entre chaque acquisition. 256 accumulations sont réalisées. Les échantillons (environ 25mg) sont solubilisés dans le chloroforme deutéré (environ 1mL).

On observe sur les spectres RMN ¹H de ces échantillons la présence de signaux vers 2,6 et 1,2 ppm attribués à des motifs époxy.
- 2,6 ppm : groupement -CH n° 4.
- 1,2 ppm : groupement -CH3 n°3.

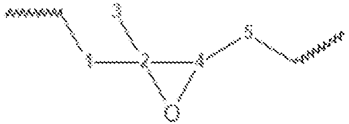

### 1.4.2 - Détermination du taux de composé 1,3-dipolaire greffé sur les caoutchoucs testés

La détermination du taux de composé 1,3-dipolaire greffé sur la chaîne de caoutchouc naturel ou sur la chaîne du polyisoprène de synthèse est réalisée par une analyse RMN. Les spectres sont acquis sur un spectromètre Avance 500 MHz BRUKER équipé d'une sonde " large bande " BBIz-grad 5 mm pour les échantillons solubles et sur un spectromètre Avance 500MHz BRUKER équipé d'une sonde HRMAS 4mm ¹H/¹³C pour les échantillons insolubles. L'expérience RMN ¹H quantitative, utilise une séquence simple impulsion 30° et un délai de répétition de 5 secondes entre chaque acquisition. 256 accumulations sont réalisées. Les échantillons (environ 25mg) sont solubilisés dans le chloroforme deutéré (environ 1mL), avec lavage de celui-ci pour éliminer l'excès de composé 1,3-dipolaire n'ayant pas réagi.

### o Caractérisation des ENR modifiés par le composé A

Le spectre RMN ¹H permet de quantifier les motifs oxyde de nitrile greffés par intégration des signaux caractéristiques des protons CH2N et CH2O qui apparaissent à un déplacement chimique compris entre 3,1 et 3,8ppm. Le spectre RMN 2D HSQC ¹H-¹³C permet de vérifier la nature du motif greffé grâce aux déplacements chimiques des atomes de carbone et de proton.

### ∘ Caractérisation des ENR modifiés par le composé B

Le spectre RMN ¹H permet de quantifier les motifs oxyde de nitrile greffés par intégration des signaux caractéristiques des protons CH3N qui apparaissent à un déplacement chimique compris entre 3,1 et 3,3ppm. Le spectre RMN 2D HSQC ¹H-¹³C permet de vérifier la nature du motif greffé grâce aux déplacements chimiques des atomes de carbone et de proton.

### 2. - Exemples de préparation de caoutchoucs naturels modifiés

### 2.1 Procédé de modification de caoutchouc naturel

Dans l'ensemble des cas, on incorpore sur outil à cylindres (mélangeur externe à 30°C) le composé 1,3-dipolaire à tester (voir tableau 2), à 30 g de caoutchouc naturel à tester ou de polyisoprène de synthèse (voir tableau 2). Le mélange est homogénéisé en 15 passes portefeuille. Cette phase de mélangeage est suivie d'un traitement thermique à 120°C sous presse à 10 bars de pression pendant 30 min.

Le pourcentage de cycle époxy avant et après la mise en œuvre du procédé de modification est déterminé par RMN selon la méthode indiquée ci-dessus.

Le pourcentage molaire de composé 1,3-dipolaire qui a été greffé à l'issue du procédé sur les caoutchoucs naturel à tester et sur le polyisoprène de synthèse est déterminé par RMN selon la méthode décrite ci-dessus.

Le rendement de greffage correspond au taux en pourcentage molaire de composé 1,3-dipolaire greffé sur la chaîne du caoutchouc naturel ou du polyisoprène de synthèse par rapport au taux en pourcentage molaire de composé 1,3-dipolaire introduit comme réactif de départ.

Les résultats obtenus sont présentés dans le tableau 2 ci-dessous.

**Tableau 2**

| Caoutchouc à tester | Composé 1,3-dipolaire utilisé | % mol époxy avant réaction (RMN) | %mol de composé 1,3 dipolaire introduit | % mol époxy après réaction (RMN) | %mol de composé 1,3 dipolaire greffé | Rendement de greffage |
|---|---|---|---|---|---|---|
| Polyisoprène de synthèse (NIPOL 2200) * | Composé A | (-) | 1 | (-) | (0,92) | 92 |
| NR plastifié * | Composé A | (-) | 1 | (-) | (0,13) | 13 |
| NR déprotéiné * | Composé A | (-) | 1 | (-) | (0,56) | 56 |
| NR déprotéiné* | Composé A | (-) | 0,2 | (-) | 0,06 | 30 |
| ENR 25** | Composé A | 27 | 0,5 | 27 | 0,35 | 70 |
| NR plastifié* | Composé B | (-) | 0,2 | (-) | 0,04 | 20 |
| ENR 25** | Composé B | 27 | 0,2 | 27 | 0,14 | 70 |

| | | | | | | |
|---|---|---|---|---|---|---|
| * hors invention ** selon l'invention | | | | | | |

Le rendement de greffage d'un composé 1,3-dipolaire sur un polyisoprène de synthèse (NIPOL 2200) est supérieur à 90%.

Le rendement de greffage d'un composé 1,3-dipolaire sur un caoutchouc naturel, qu'il soit déprotéiné ou plastifié, est faible et au maximum égal à 56 %.

Par contre, de manière étonnante, lorsque le caoutchouc naturel est époxydé, on observe un rendement de greffage supérieur à 60 %. En outre, on observe que le pourcentage molaire d'unité 1,4-cis isoprène époxydé avant et après greffage n'a pas été modifié, indiquant que le cycle époxy n'est pas modifié lors de la réaction de greffage.

Le rendement de greffage n'est pas affecté par la nature du groupe chimique porté par le composé 1,3-dipolaire. En effet, le rendement de greffage est identique pour le composé A et pour le composé B.

## Revendications

1. Procédé de modification d'un caoutchouc naturel comprenant au moins les étapes suivantes:
i. disposer d'au moins un caoutchouc naturel et époxyder ledit caoutchouc naturel pour obtenir un caoutchouc naturel époxydé, ou disposer d'un caoutchouc naturel préalablement époxydé,
ii. greffer sur ledit caoutchouc naturel époxydé ou sur ledit caoutchouc naturel préalablement époxydé au moins un composé 1,3-dipolaire ayant au moins un atome d'azote.

2. Procédé selon la revendication 1, dans lequel ledit caoutchouc naturel époxydé ou ledit caoutchouc naturel préalablement époxydé a un taux d'époxydation inférieur ou égal à 50% mol, et de préférence supérieur ou égal à 0,5% mol, de préférence allant de 1 à 45% mol, de manière plus préférée de 2 à 30 % mol.

3. Procédé selon l'une quelconque des revendications 1 à 2, dans lequel le composé 1,3-dipolaire comprend au moins un dipôle oxyde de nitrile, imine de nitrile ou nitrone.

4. Procédé selon la revendication 3, dans lequel le composé 1,3-dipolaire comprend au moins un dipôle oxyde de nitrile.

5. Procédé selon la revendication 4, dans lequel le dipôle oxyde de nitrile appartient à un motif répondant à la formule générale (I) 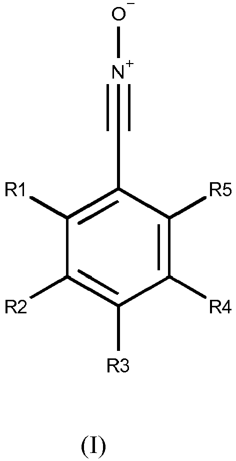 dans laquelle :
- R1, R2, R3, R4, R5, identiques ou différents, représentent un atome d'hydrogène, un atome d'halogène, un alkyle en C₁-C₅, un alcoxyle en C₁-C₅ ou une liaison covalente permettant le rattachement au reste du composé 1,3-dipolaire;
- à la condition qu'au moins un des R1, R2, R3, R4, R5 représente ladite liaison covalente.

6. Procédé selon l'une quelconque des revendications 1 à 5, dans lequel le taux dudit composé 1,3-dipolaire va de 0,1 à 10 % mol, de préférence de 0,1 à 5 % mol.

7. Procédé selon l'une quelconque des revendications 1 à 6, dans lequel le composé 1,3-dipolaire est porteur d'au moins un groupe chimique destiné à être greffé sur le caoutchouc naturel époxydé, ledit groupe chimique étant une chaîne hydrocarbonée pouvant éventuellement contenir un hétéroatome.

8. Procédé selon la revendication 7, dans lequel le groupe chimique est choisi parmi les groupes hydrocarbonés, les hétérocycles azotés ou soufrés éventuellement substitués, les esters, les phosphates, les dialkylamino et les groupes associatifs comprenant au moins un atome d'azote.

9. Procédé selon la revendication 8, dans lequel le groupe associatif comprenant au moins un atome d'azote est choisi parmi les formules (IV), (V) (VI), (VII) et (VIII) suivantes : 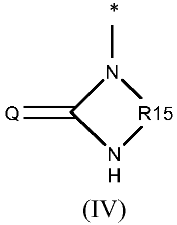 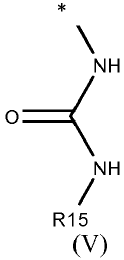 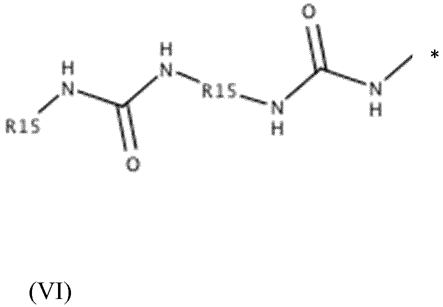 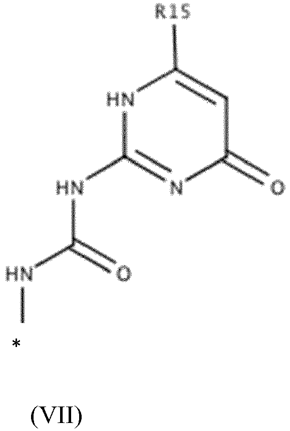 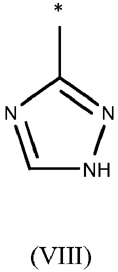 dans lesquelles:
- R15 représente un groupe hydrocarboné pouvant éventuellement contenir des hétéroatomes,
- Q représente un atome d'oxygène ou de soufre ou NH, de préférence un atome d'oxygène,
- le symbole * représente un rattachement indirect au dipôle du composé 1,3 dipolaire.

10. Procédé selon la revendication 8 et 9, dans lequel le composé 1,3-dipolaire est choisi parmi les composés répondant aux formules (IX), (X), (XI), (XII), (XIII), (XIV), (XV), (XVI), (XVII), (XVIII), (XIX) et leurs formes mésomères:

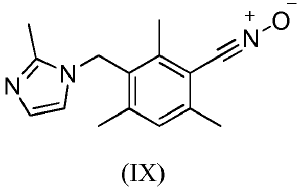

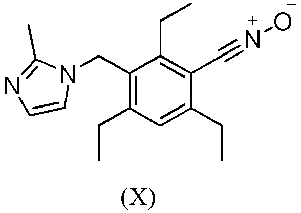

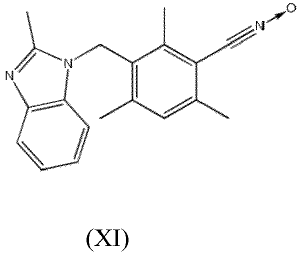

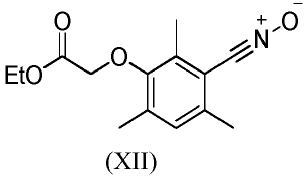

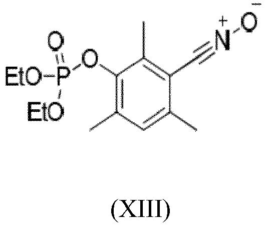

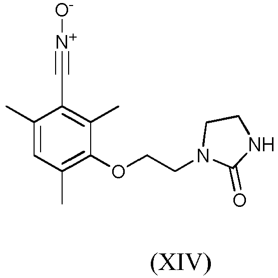

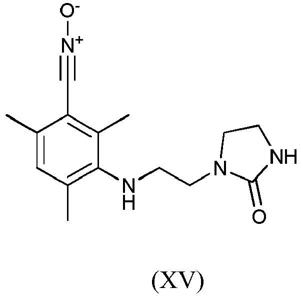

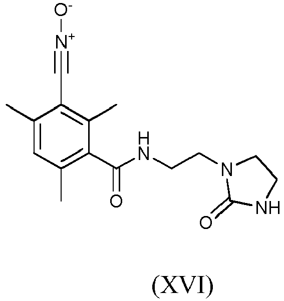

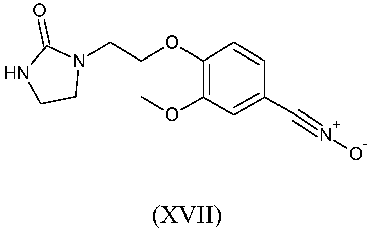

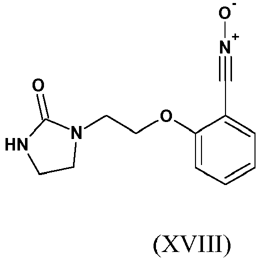

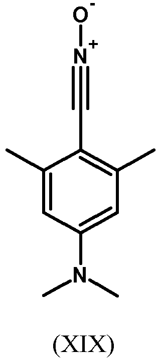

11. Composition de caoutchouc à base :
- d'au moins un caoutchouc naturel modifié susceptible d'être obtenu selon le procédé défini à l'une quelconque des revendications 1 à 10,
- d'au moins une charge renforçante, et
- d'au moins un système de réticulation.

12. Procédé de fabrication d'une composition selon la revendication 11, le procédé comprenant au moins les étapes suivantes:
- incorporer au caoutchouc naturel modifié, au moins une charge renforçante, en malaxant thermomécaniquement le tout, en une ou plusieurs fois, jusqu'à atteindre une température maximale allant de 130°C à 200°C, de préférence allant de 145°C à 185°C,
- refroidir l'ensemble à une température inférieure à 100°C,
- incorporer ensuite au moins un système de réticulation chimique,
- malaxer le tout jusqu'à une température maximale inférieure à 120°C,
- extruder ou calandrer la composition de caoutchouc ainsi obtenue.

13. Procédé de fabrication d'une composition selon la revendication 11, le procédé comprenant au moins les étapes suivantes:
- disposer d'au moins un caoutchouc naturel et époxyder ledit caoutchouc naturel pour obtenir un caoutchouc naturel époxydé, ou disposer d'un caoutchouc naturel préalablement époxydé,
- incorporer au caoutchouc naturel époxydé de l'étape précédente, au moins un composé 1,3-dipolaire ayant au moins un atome d'azote,
- incorporer subséquemment au moins une charge renforçante, tout en malaxant thermomécaniquement le tout, en une ou plusieurs fois, jusqu'à atteindre une température maximale allant de 130°C à 200°C, de préférence allant de 145°C à 185°C,
- refroidir l'ensemble à une température inférieure à 100°C,
- incorporer ensuite au moins un système de réticulation chimique,
- malaxer le tout jusqu'à une température maximale inférieure à 120°C,
- extruder ou calandrer la composition de caoutchouc ainsi obtenue.

14. Produit fini ou semi-fini en caoutchouc comprenant au moins une composition de caoutchouc définie selon la revendication 11 ou susceptible d'être obtenue par le procédé selon la revendication 12 ou 13.

15. Pneumatique comprenant au moins un produit semi-fini défini selon la revendication 14.

## Patentansprüche

1. Verfahren zur Modifizierung eines Naturkautschuks, das mindestens die folgenden Schritte umfasst:
i. Bereitstellen mindestens eines Naturkautschuks und Epoxidieren des Naturkautschuks zum Erhalt eines epoxidierten Naturkautschuks oder Bereitstellen eines vorher epoxidierten Naturkautschuks,
ii. Aufpfropfen mindestens einer 1,3-dipolaren Verbindung mit mindestens einem Stickstoffatom auf dem epoxidierten Naturkautschuk oder den vorher epoxidierten Naturkautschuk.

2. Verfahren nach Anspruch 1, wobei der epoxidierte Naturkautschuk oder der vorher epoxidierte Naturkautschuk einen Epoxidationsgrad kleiner oder gleich 50 Mol-% und vorzugsweise größer oder gleich 0,5 Mol-%, vorzugsweise im Bereich von 1 bis 45 Mol-%, weiter bevorzugt von 2 bis 30 mol-%, aufweist.

3. Verfahren nach einem der Ansprüche 1 bis 2, wobei die 1,3-dipolare Verbindung mindestens ein Nitriloxid, Nitrilimin oder Nitron umfasst.

4. Verfahren nach Anspruch 3, wobei die 1,3-dipolare Verbindung mindestens einen Nitriloxid-Dipol umfasst.

5. Verfahren nach Anspruch 4, wobei der Nitriloxid-Dipol zu einer Einheit gehört, die der allgemeinen Formel (I) 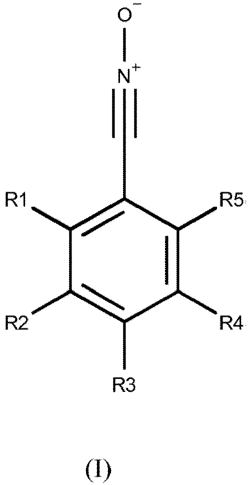 entspricht, in der:
- R1, R2, R3, R4, R5, die gleich oder verschieden sind, für ein Wasserstoffatom, ein Halogenatom, ein C₁-C₅-Alkyl, ein C₁-C₅-Alkoxy oder eine kovalente Bindung, die die Verknüpfung mit dem Rest der 1,3-dipolaren Verbindung erlaubt, stehen;
- mit der Maßgabe, dass mindestens eine der Variablen R1, R2, R3, R4, R5 für die kovalente Bindung steht.

6. Verfahren nach einem der Ansprüche 1 bis 5, wobei der Gehalt der 1,3-dipolaren Verbindung im Bereich von 0,1 bis 10 Mol-%, vorzugsweise von 0,1 bis 5 Mol-%, liegt.

7. Verfahren nach einem der Ansprüche 1 bis 6, wobei die 1,3-dipolare Verbindung mindestens eine Gruppe trägt, die zum Aufpfropfen auf dem epoxidierten Naturkautschuk vorgesehen ist, wobei es sich bei der chemischen Gruppe um eine Kohlenwasserstoffkette, die gegebenenfalls ein Atom enthalten kann, handelt.

8. Verfahren nach Anspruch 7, wobei die chemische Gruppe aus Kohlenwasserstoffgruppen, gegebenenfalls substituierten Stickstoff- oder SchwefelHeterocyclen, Estern, Phosphaten, Dialkylaminogruppen und assoziativen Gruppen mit mindestens einem Stickstoffatom ausgewählt sind.

9. Verfahren nach Anspruch 8, wobei die assoziative Gruppe mit mindestens einem Stickstoffatom aus den folgenden Formeln (IV), (V), (VI), (VII) und (VIII) ausgewählt ist: 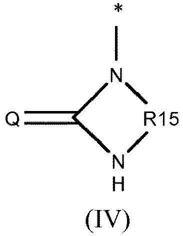 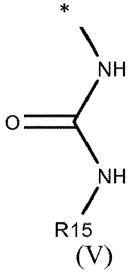 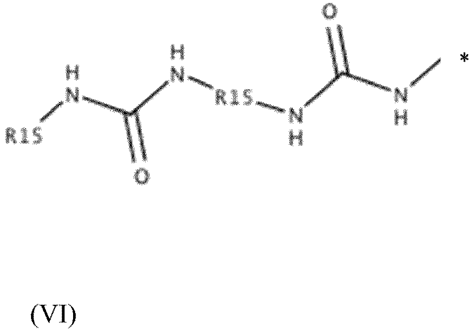 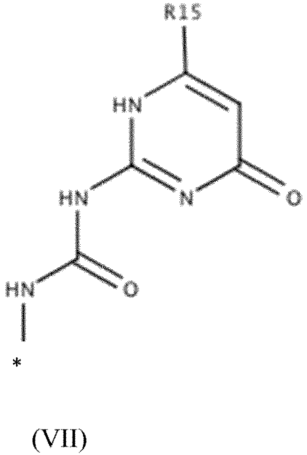 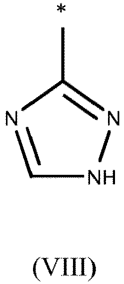 in denen:
- R15 für eine Kohlenwasserstoffgruppe, die gegebenenfalls Heteroatome enthalten kann, steht,
- Q für ein Sauerstoff- oder Schwefelatom oder NH, vorzugsweise ein Sauerstoffatom, steht,
- das Symbol * für eine indirekte Verknüpfung mit dem Dipol der 1,3-dipolaren Verbindung steht.

10. Verfahren nach Anspruch 8 und 9, wobei die 1,3-dipolare Verbindung aus den Verbindungen der Formeln (IX), (X), (XI), (XII), (XIII), (XIV), (XV), (XVI), (XVII), (XVIII), (XIX) und deren mesomeren Formen ausgewählt ist:

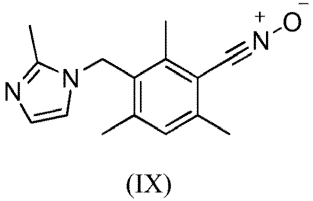

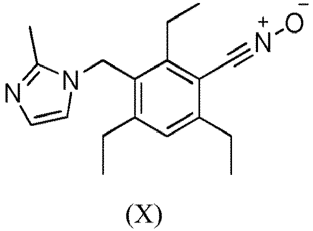

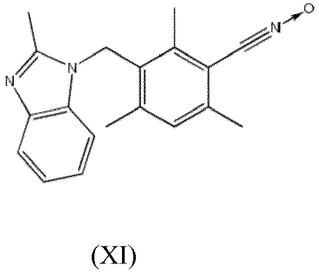

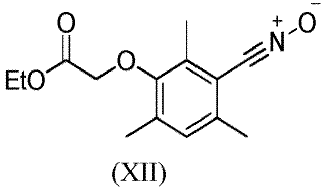

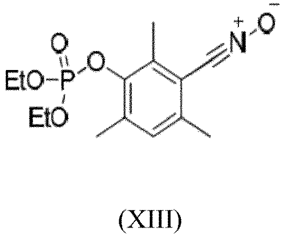

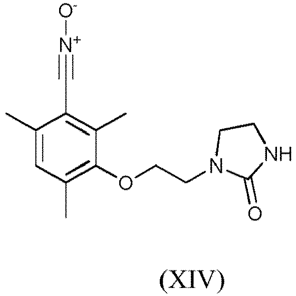

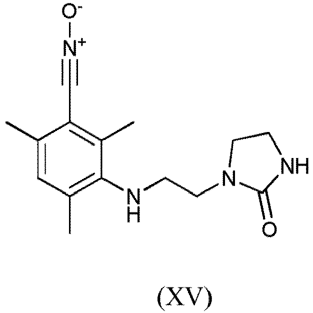

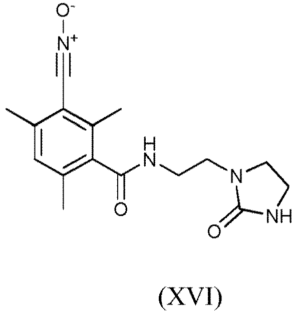

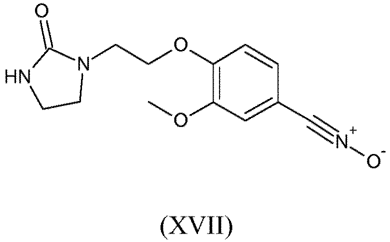

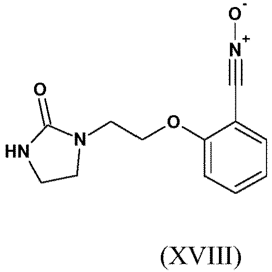

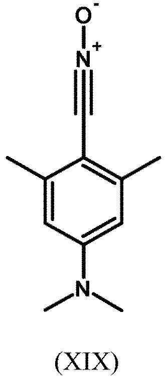

11. Kautschukzusammensetzung auf Basis von:
- mindestens einem modifizierten Naturkautschuk, der nach dem Verfahren gemäß einem der Ansprüche 1 bis 10 erhältlich ist,
- mindestens einem verstärkenden Füllstoff und
- mindestens einem Vernetzungssystem.

12. Verfahren zur Herstellung einer Zusammensetzung nach Anspruch 11, wobei das Verfahren mindestens die folgenden Schritte umfasst:
- Einarbeiten von mindestens einem verstärkenden Füllstoff in den modifizierten Naturkautschuk, in dem man das Ganze ein- oder mehrmals thermomechanisch knetet, bis eine Höchsttemperatur im Bereich von 130 °C bis 200 °C, vorzugsweise im Bereich von 145 °C bis 185 °C, erreicht ist;
- Abkühlen des Ganzen auf eine Temperatur von weniger als 100 °C,
- dann Einarbeiten mindestens eines chemischen Vernetzungssystems,
- Kneten des Ganzen bis zu einer Höchsttemperatur von weniger als 120 °C,
- Extrudieren oder Kalandrieren der so erhaltenen Kautschukzusammensetzung.

13. Verfahren zur Herstellung einer Zusammensetzung nach Anspruch 11, wobei das Verfahren mindestens die folgenden Schritte umfasst:
- Bereitstellen mindestens eines Naturkautschuks und Epoxidieren des Naturkautschuks zum Erhalt eines epoxidierten Naturkautschuks oder Bereitstellen eines vorher epoxidierten Naturkautschuks,
- Einarbeiten mindestens einer 1,3-dipolaren Verbindung mit mindestens einem Stickstoffatom in dem epoxidierten Naturkautschuk aus dem vorhergehenden Schritt,
- anschließendes Einarbeiten von mindestens einem verstärkenden Füllstoff in den modifizierten Naturkautschuk, indem man das Ganze ein- oder mehrmals thermomechanisch knetet, bis eine Höchsttemperatur im Bereich von 130 °C bis 200 °C, vorzugsweise im Bereich von 145 °C bis 185 °C, erreicht ist;
- Abkühlen des Ganzen auf eine Temperatur von weniger als 100 °C,
- dann Einarbeiten mindestens eines chemischen Vernetzungssystems,
- Kneten des Ganzen bis zu einer Höchsttemperatur von weniger als 120 °C,
- Extrudieren oder Kalandrieren der so erhaltenen Kautschukzusammensetzung.

14. Kautschukerzeugnis oder -halbzeug, umfassend mindestens eine Kautschukzusammensetzung gemäß Anspruch 11 oder eine durch das Verfahren nach Anspruch 12 oder 13 erhältliche Kautschukzusammensetzung.

15. Reifen, umfassend mindestens ein Halbzeug gemäß Anspruch 14.

## Claims

1. Process for modifying a natural rubber, comprising at least the following steps:
i. providing at least one natural rubber and epoxidizing said natural rubber to obtain an epoxidized natural rubber, or providing a pre-epoxidized natural rubber,
ii. grafting, to said epoxidized natural rubber or to said pre-epoxidized natural rubber, at least one 1,3-dipolar compound having at least one nitrogen atom.

2. Process according to Claim 1, wherein said epoxidized natural rubber or said pre-epoxidized natural rubber has a degree of epoxidation of less than or equal to 50 mol% and preferably greater than or equal to 0.5 mol%, preferably ranging from 1 to 45 mol%, more preferably from 2 to 30 mol%.

3. Process according to any one of Claims 1 to 2, wherein the 1,3-dipolar compound comprises at least one nitrile oxide, nitrilimine or nitrone dipole.

4. Process according to Claim 3, wherein the 1,3-dipolar compound comprises at least one nitrile oxide dipole.

5. Process according to Claim 4, wherein the nitrile oxide dipole belongs to a unit corresponding to the general formula (I) 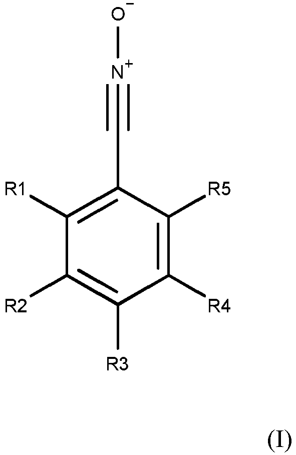 in which:
- R1, R2, R3, R4, R5, which are identical or different, represent a hydrogen atom, a halogen atom, a C₁-C₅ alkyl, a C₁-C₅ alkoxyl or a covalent bond enabling attachment to the remainder of the 1,3-dipolar compound;
- with the proviso that at least one of R1, R2, R3, R4, R5 represents said covalent bond.

6. Process according to any one of Claims 1 to 5, wherein the content of said 1,3-dipolar compound ranges from 0.1 to 10 mol%, preferably from 0.1 to 5 mol%.

7. Process according to any one of Claims 1 to 6, wherein the 1,3-dipolar compound bears at least one chemical group intended to be grafted to the epoxidized natural rubber, said chemical group being a hydrocarbon-based chain that may optionally contain a heteroatom.

8. Process according to Claim 7, wherein the chemical group is selected from hydrocarbon-based groups, optionally substituted nitrogenous or sulfur-containing heterocycles, esters, phosphates, dialkylaminos and associative groups comprising at least one nitrogen atom.

9. Process according to Claim 8, wherein the associative group comprising at least one nitrogen atom is selected from the following formulae (IV), (V) (VI), (VII) and (VIII): 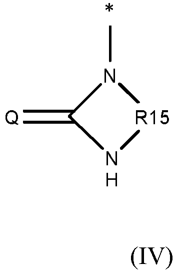 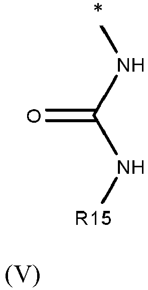 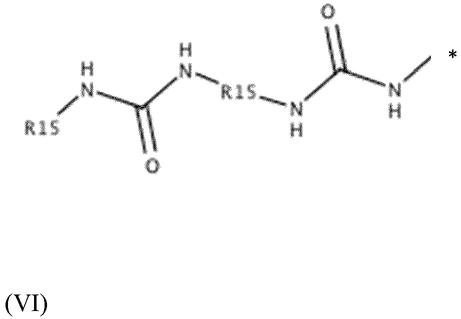 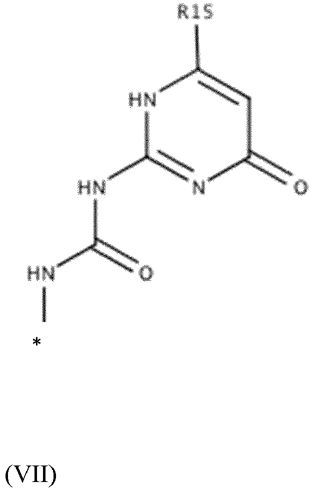 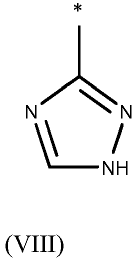 in which:
- R15 represents a hydrocarbon-based group that may optionally contain heteroatoms,
- Q represents an oxygen or sulfur atom or NH, preferably an oxygen atom,
- the symbol * represents an indirect attachment to the dipole of the 1,3-dipolar compound.

10. Process according to Claims 8 and 9, wherein the 1,3-dipolar compound is selected from the compounds corresponding to the formulae (IX), (X), (XI), (XII), (XIII), (XIV), (XV), (XVI), (XVII), (XVIII), (XIX) and their mesomeric forms:

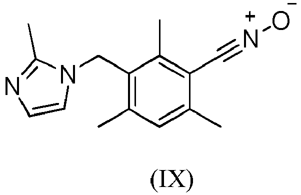

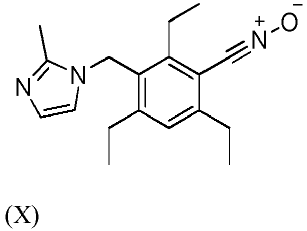

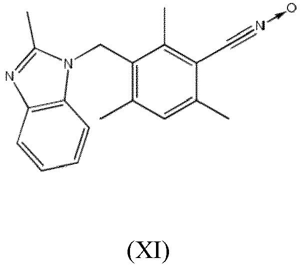

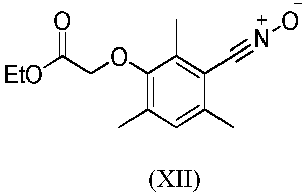

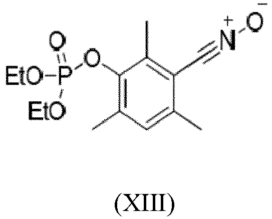

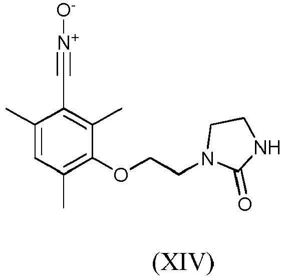

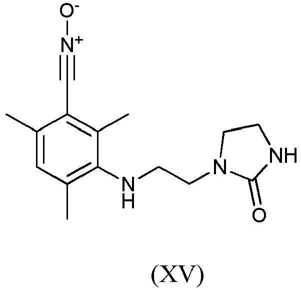

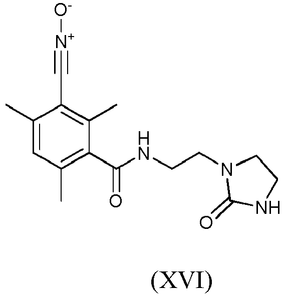

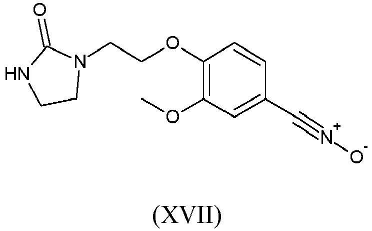

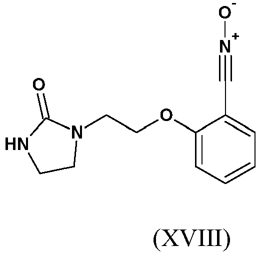

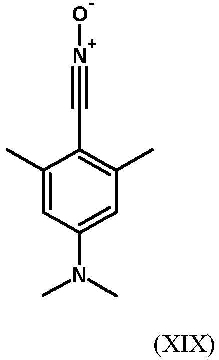

11. Rubber composition based on:
- at least one modified natural rubber capable of being obtained according to the process defined in any one of Claims 1 to 10;
- at least one reinforcing filler, and
- at least one crosslinking system.

12. Process for producing a composition according to Claim 11, the process comprising at least the following steps:
- incorporating at least one reinforcing filler into the modified natural rubber, everything being kneaded thermomechanically, once or several times, until a maximum temperature ranging from 130°C to 200°C, preferably ranging from 145°C to 185°C, is reached,
- cooling the combined mixture to a temperature below 100°C,
- then incorporating at least one chemical crosslinking system,
- kneading everything up to a maximum temperature of less than 120°C,
- extruding or calendering the rubber composition thus obtained.

13. Process for producing a composition according to Claim 11, the process comprising at least the following steps:
- providing at least one natural rubber and epoxidizing said natural rubber to obtain an epoxidized natural rubber, or providing a pre-epoxidized natural rubber,
- incorporating at least one 1,3-dipolar compound having at least one nitrogen atom to the epoxidized natural rubber from the preceding step,
- subsequently incorporating at least one reinforcing filler, everything being kneaded thermomechanically, once or several times, until a maximum temperature ranging from 130°C to 200°C, preferably ranging from 145°C to 185°C, is reached,
- cooling the combined mixture to a temperature below 100°C,
- then incorporating at least one chemical crosslinking system,
- kneading everything up to a maximum temperature of less than 120°C,
- extruding or calendering the rubber composition thus obtained.

14. Finished or semi-finished rubber product comprising at least one rubber composition defined according to Claim 11 or capable of being obtained by the process according to Claim 12 or 13.

15. Tyre comprising at least one semi-finished product defined according to Claim 14.
